# EUROPEAN PATENT SPECIFICATION

(11) **EP 4 513 823 B1**
(45) Date of publication and mention of the grant of the patent: **28.10.2026**
(21) Application number: 22944872.5
(22) Date of filing: 01.06.2022
(51) Int. Cl.: H04J 3/06

(54) **TIME SYNCHRONIZATION APPARATUS, TIME SYNCHRONIZATION METHOD, AND TIME SYNCHRONIZATION PROGRAM**
ZEITSYNCHRONISATIONSVORRICHTUNG, ZEITSYNCHRONISATIONSVERFAHREN UND ZEITSYNCHRONISATIONSPROGRAMM
APPAREIL DE SYNCHRONISATION TEMPORELLE, PROCÉDÉ DE SYNCHRONISATION TEMPORELLE ET PROGRAMME DE SYNCHRONISATION TEMPORELLE

(43) Date of publication of application: 26.02.2025
(73) Proprietor: MITSUBISHI ELECTRIC CORPORATION, Chiyoda-ku Tokyo 100-8310 (JP)
(72) Inventor: SAKAGAMI, Yusuke, Tokyo 100-8310 (JP); TANIGUCHI, Sachiko, Tokyo 100-8310 (JP); TOMISAWA, Toshiaki, Tokyo 100-8310 (JP); SAKAGUCHI, Naotaka, Tokyo 100-8310 (JP)
(74) Representative: Pfenning, Meinig & Partner mbB
(86) International application number: PCT/JP2022/022331
(87) International publication number: WO 2023/233588

(56) References cited:
- JP-A- 2012 023 654
- JP-A- 2017 022 526
- JP-A- 2020 202 498
- PAHLEVAN MARYAM ET AL: "Simulation Framework for Clock Synchronization in Time Sensitive Networking", 2019 IEEE 22ND INTERNATIONAL SYMPOSIUM ON REAL-TIME DISTRIBUTED COMPUTING (ISORC), IEEE, 7 May 2019 (2019-05-07), pages 213 - 220, XP033576220, DOI: 10.1109/ISORC.2019.00046
- TIME-SENSITIVE NETWORKING TASK GROUP OF IEEE 802 1: "Timing and Synchronization for Time- Sensitive Applications", vol. 802.1as drafts rev, no. d7, 30 March 2018 (2018-03-30), pages 1 - 496, XP068124064, Retrieved from the Internet <URL:grouper.ieee.org/groups/802/1/files/private/as-rev-drafts/d7/802-1AS-rev-d7-0.pdf> [retrieved on 20180330]

## Description

### Technical Field

The present disclosure relates to a technology for synchronizing the time of devices.

### Background Art

The integration of control networks and information networks is advancing in industrial Ethernet (registered trademark) networks. Then, the TSN technology is being standardized as a method for transferring control data in real time. TSN is an abbreviation for Time Sensitive Networking. The TSN technology is a technology that synchronizes time between devices with high accuracy through a network switch (hereinafter referred to as a transfer device) and schedules traffic.

One of the TSN technologies is the time synchronization method described in Non-Patent Literature 1 and Non-Patent Literature 2, which is a highly accurate network time synchronization technology.

In the time synchronization method described in Non-Patent Literature 1, each device connected to a network, including a transfer device, periodically measures a transmission delay and a frequency deviation between adjacent devices. Then, highly accurate time synchronization is performed to time information periodically distributed via the network from a grandmaster clock device (hereinafter referred to as a GM), which is a time source, based on the measured transmission delay and frequency deviation.

In the time synchronization method described in Non-Patent Literature 2, a plurality of GMs, which are time sources, are disposed on a network for the purpose of increasing the reliability of a time synchronization system. Each of the GMs periodically distributes time source information such as the accuracy and reliability of a clock. A transfer device selects the best time source information from the time source information received from a single port or a plurality of ports by a BMCA. BMCA is an abbreviation for Best Master Clock Algorithm. A distribution path is formed, which is referred to as a clock tree that distributes time starting from the GM corresponding to the selected time source information.

More specifically, in Non-Patent Literature 2, the GM periodically distributes an Announce message. Based on the Announce message, the transfer device selects a port with the best time synchronization quality, as a slave port by the BMCA. As a result, a distribution path for the time information according to a Sync/FollowUp message that is periodically distributed by the GM, is decided.

At this time, the slave port is selected according to a Priority Vector configured with static parameters. The static parameters are a priority degree which is set for the GM according to the network design, an attribute, the number of stages of an Announce message, an MAC address, a port number, and the like. The state of the network which may change from time to time depending on the states of a transmission path and a transfer device on a time distribution path, is not reflected in the selection of the slave port. Therefore, the time distribution path decided by selecting the slave port is not necessarily the best path.

Patent Literature 1 describes a technique for switching to a time distribution path in consideration of the states of a transmission path and a transfer device on the time distribution path. Specifically, in the technique described in Patent Literature 1, a delay is measured for each of a plurality of time distribution paths between the transfer device and the GM. Then, the time distribution path with the highest synchronization accuracy is specified among a plurality of time distribution paths, based on a delay measurement result. Non-Patent Literature 3 describes a technique for time synchronization comprising selecting a grandmaster via BMCA and calculating a Cumulative Scaled Rate Offset (CSRO) derived from the accumulation of Neighbor Rate Ratios (NRR) in accordance with Non-Patent Literature 4.

### Citation List

### Patent Literature

Patent Literature 1: JP 2020-202498 A

### Non-Patent Literature

Non-Patent Literature 1: IEEE Std 802.1AS-2020 (Timing and Synchronization for Time-Sensitive Applications), Approved 30 January 2020, P163, P186
Non-Patent Literature 2: IEEE1588-2019 IEEE Standard for a Precision Clock Synchronization Protocol for Networked Measurement and Control Systems P161, P217, P223, P378
Non-Patent Literature 3: PAHLEVAN MARYAM ET AL: "Simulation Framework for Clock Synchronization in Time Sensitive Networking", 2019 IEEE 22ND INTERNATIONAL SYMPOSIUM ON REAL-TIME DISTRIBUTED COMPUTING (ISORC), IEEE, 7 May 2019, pages 213-220
Non-Patent Literature 4: TIME-SENSITIVE NETWORKING TASK GROUP OF IEEE 802 1: "Timing and Synchronization for Time- Sensitive Applications", IEEE DRAFT; rev, no. d7, 30 March 2018, pages 1-496

### Summary of Invention

### Technical Problem

In the technique described in Patent Literature 1, a time distribution path is decided in consideration of a delay for each of a plurality of time distribution paths. However, when the technique for synchronizing the time with high accuracy based on a transmission delay and a frequency deviation as described in Non-patent Literature 1 is used, the time distribution path decided by the technique described in Patent Literature 1 may not necessarily be the best path.

The present disclosure aims to enable the specification of an appropriate time distribution path even when the technique for synchronizing the time with high accuracy based on a propagation delay and a frequency deviation is used.

### Solution to Problem

This problem is solved by a time synchronization apparatus according to claim 1, a time synchronization method according to claim 7 and a time synchronization program according to claim 8. A time synchronization apparatus according to the present disclosure includes:
a synchronization port decision unit to decide a time synchronization port among a plurality of ports, based on a cumulative frequency deviation which is a cumulative value of a frequency deviation from a master device for each of the plurality of ports that receive time information transmitted from the master device via different transfer devices; and
a time synchronization unit to update local time based on the time information received at the time synchronization port decided by the synchronization port decision unit.

### Advantageous Effects of Invention

The present disclosure decides from a plurality of ports, a time synchronization port based on a cumulative frequency deviation from a master device. As a result, even when the technique for synchronizing the time with high accuracy based on a transmission delay and a frequency deviation is used, an appropriate time distribution path can be specified.

### Brief Description of Drawings

Fig. 1 is a configuration diagram of a time synchronization system 100 according to Embodiment 1.
Fig. 2 is a hardware configuration diagram of a transfer device 10 according to Embodiment 1.
Fig. 3 is a functional configuration diagram of the transfer device 10 according to Embodiment 1.
Fig. 4 is a configuration diagram of a synchronization function unit 24 according to Embodiment 1.
Fig. 5 is a flowchart of overall processing of the transfer device 10 according to Embodiment 1.
Fig. 6 is an explanatory diagram of a delay calculation unit 35 according to Embodiment 1.
Fig. 7 is an explanatory diagram of a relay process of a message according to Embodiment 1.
Fig. 8 is a flowchart of a decision process of a time synchronization port according to Embodiment 1.
Fig. 9 is a flowchart of an abnormality detection process according to Embodiment 1.
Fig. 10 is an explanatory diagram of effects according to Embodiment 1.
Fig. 11 is a configuration diagram of the time synchronization system 100 according to Embodiment 2.
Fig. 12 is an explanatory diagram of a Priority Vector according to Embodiment 2.
Fig. 13 is flowchart of BMCA described in Non-Patent Literature 2.
Fig. 14 is a flowchart of the decision process of the time synchronization port according to Embodiment 2.

### Description of Embodiments

### Embodiment 1.

### *** Description of Configuration ***

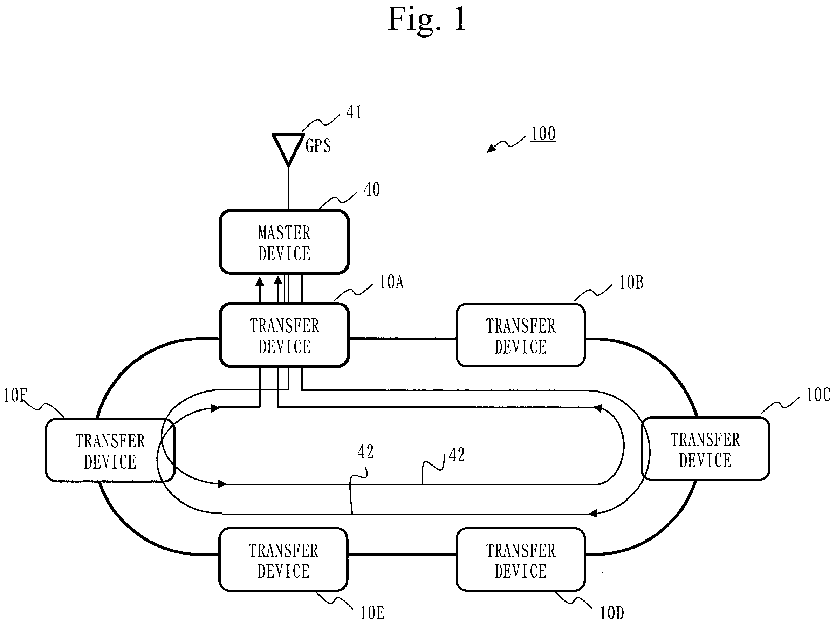

A configuration of a time synchronization system 100 according to Embodiment 1will be described with reference to Fig. 1.

The time synchronization system 100 includes a plurality of transfer devices 10 and a master device 40. In Fig. 1, the time synchronization system 100 includes six transfer devices 10 which are transfer devices 10 A through 10F.

The transfer device 10 is a time synchronization device that performs time synchronization based on time information distributed by the master device 40. The transfer device 10 is, for example, a layer 2 switch that conforms to a gPTP. PTP is an abbreviation for Precision Time Protocol. The gPTP is defined in IEEE 802.1AS-2011.

The master device 40 is a grandmaster clock device. The master device 40 is a device connected to a GPS 41. GPS is an abbreviation for Global Positioning System. The master device 40 performs time distribution to each of the transfer devices 10 serving as slave devices, by circulating messages 42 (a Sync message and a FollowUp message). The messages 42 are issued at the master device 40 and terminated at the master device 40.

In Fig. 1, the master device 40 connected to the GPS 41 is provided in addition to the transfer devices 10. However, any one of the transfer devices 10 may be connected to the GPS 41 and operated as the master device 40. The transfer device 10A in Fig. 1 may be connected to the GPS 41 and operated as the master device 40, for example.

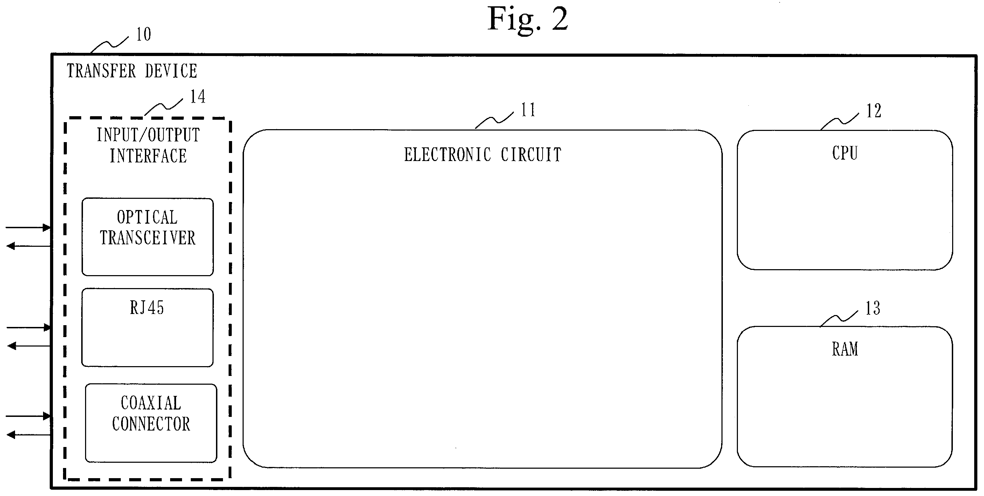

A hardware configuration of the transfer device 10 according to Embodiment 1 will be described with reference to Fig. 2.

The transfer device 10 includes an electronic circuit 11, a CPU 12, an RAM 13, an input/output interface 14. CPU is abbreviation for Central Processing Unit. RAM is an abbreviation for Random Access Memory.

The electronic circuit 11 is a network processor for implementing a unique time synchronization function. A specific example of the electronic circuit 11 is an FPGA or an ASIC. FPGA is an abbreviation for Field-Programmable Gate Array. ASIC is an abbreviation for Application Specific Integrated Circuit.

The CPU 12 is a processor that performs configuration of the transfer device 10, various controls, various monitoring, and the like. The RAM is a storage device that temporarily stores data. The input/output interface 14 is an interface for data input and output with external devices. Specific examples of the input/output interface 14 are ports for an optical transceiver, an RJ45 (LAN cable), and a coaxial connector. LAN is an abbreviation for Local Area Network.

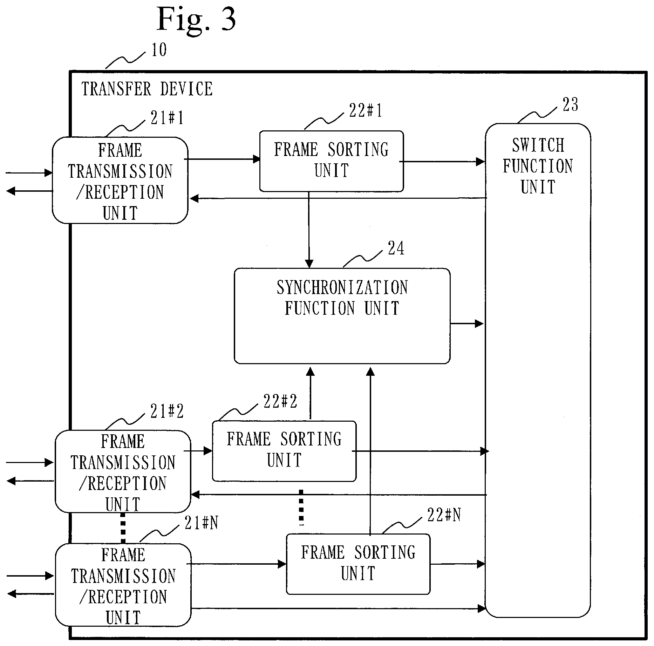

A functional configuration of the transfer device 10 according to Embodiment 1 will be described with reference to Fig. 3.

The transfer device 10 includes a plurality of frame transmission/reception units 21, a plurality of frame sorting units 22, a switch function unit 23, and a synchronization function unit 24, as functional components. In Fig. 3, the transfer device 10 includes frame transmission/reception units 21# through 21#N, as the frame transmission/reception units 21. Further, the transfer device 10 includes frame sorting units 22#1 through 22#N, as the frame sorting units 22. Each of the frame transmission/reception units 21 is associated with the frame sorting unit 22.

The frame transmission/reception unit 21 has a function of transmission and reception of a frame. The frame transmission/reception unit 21 performs data conversion from a layer 2 to a layer 1 when transmitting the frame. The frame transmission/reception unit 21 performs data conversion from the layer 1 to the layer 2 when receiving the frame. The layer 1 is a physical layer. The layer 2 is an MAC. MAC is an abbreviation for Medium Access Control.

The frame transmission/reception unit 21 discards unconvertible data or abnormal data. The frame transmission/reception unit 21 conveys normal data to the frame sorting unit 22.

The frame sorting unit 22 performs information extraction and analyzation within a frame. Specifically, the frame sorting unit 22 performs the discarding of an error frame and the extraction of various control frames.

The frame sorting unit 22 conveys to the switch function unit 23, a frame that needs to be transferred by the transfer device 10. Transfer means switching. The frame that needs to be transferred is a general frame other than the control frames to be described below.

The switch function unit 23 decides a destination output port for a frame conveyed from the frame sorting unit 22. The switch function unit 23 decides the destination output port according to values of an MAC address and a VLAN stored in the frame. VLAN is an abbreviation for Virtual Local Area Network. The switch function unit 23 performs a frame transfer process to the decided destination output port side.

The switch function unit 23 may have a function of temporarily storing a frame in the RAM 13 during a congestion time or the like of the frame transfer process. The switch function unit 23 decides whether or not to save the frame depending on the transfer capacity or the transfer scale.

The synchronization function unit 24 performs a process on a time synchronization related frame (hereinafter referred to as a PTP frame) among the control frames extracted by the frame sorting unit 22. The synchronization function unit 24 updates the local time by following the time information on a GM stored in the SYNC message and the FOLLOWUP message which are one of the PTP frames and distributed.

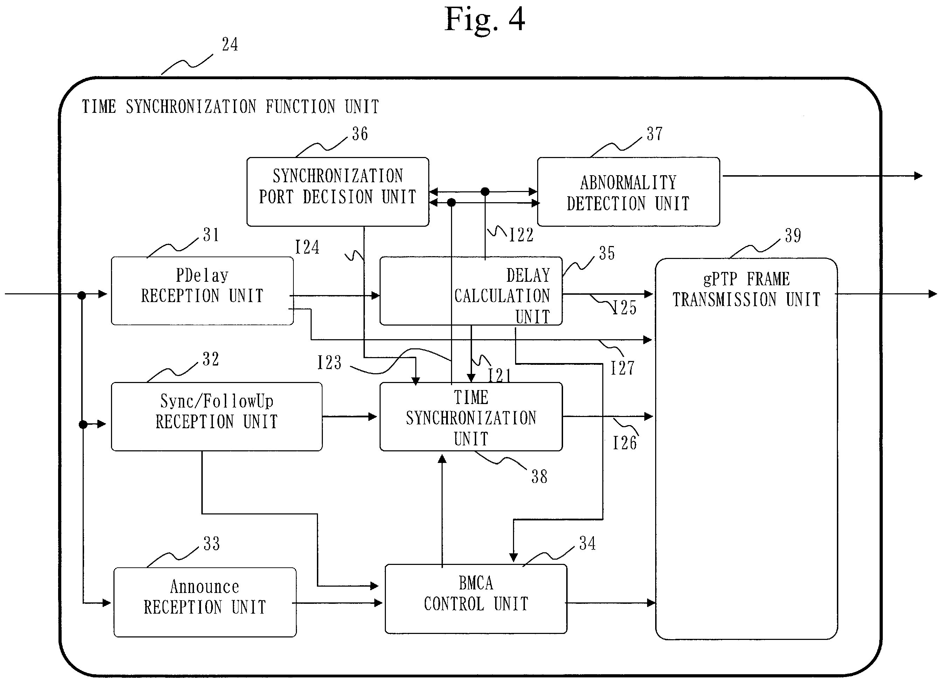

A configuration of the synchronization function unit 24 according to Embodiment 1 will be described with reference to Fig. 4.

The synchronization function unit 24 includes a PDelay reception unit 31, a Sync/FollowUp reception unit 32, an Announce reception unit 33, and a BMCA control unit 34, as functional components.

The PDelay reception unit 31 performs a reception process on a PDelay message among the PTP frames, and extracts a parameter for communication delay measurement. The PDelay messages are a PDelay request message, a PDelay response message, and a PDelay response Followup message.

The Sync/FollowUp reception unit 32 performs the reception process on the Sync message and the FollowUp message among the PTP frames, and extracts the time information for performing time synchronization and a parameter for performing correction calculation.

The Announce reception unit 33 performs the reception process on an Announce message among the PTP frames, and extracts a parameter necessary for a BMCA execution.

The BMCA control unit 34 executes a BMCA that automatically configures a time distribution tree by aggregating Announce messages from devices having a time synchronization function on a network.

Further, the synchronization function unit 24 includes a delay calculation unit 35, a synchronization port decision unit 36, an abnormality detection unit 37, a time synchronization unit 38, and a gPTP frame transmission unit 39, as functional components. These functional components have properties.

The delay calculation unit 35 calculates a device delay during time distribution.

The synchronization port decision unit 36 decides among the SYNC messages and the FOLLOWUP messages received at a plurality of ports, the SYNC message and the FOLLOWUP message received at any of the ports are used as standards for time synchronization.

The abnormality detection unit 37 detects quality degradation or abnormality occurrence between adjacent devices and throughout the entire network.

The time synchronization unit 38 updates the local time based on the time information distributed from the master device 40.

The gPTP frame transmission unit 39 generates and outputs a PTP frame based on a result processed by another function.

### *** Description of Operation ***

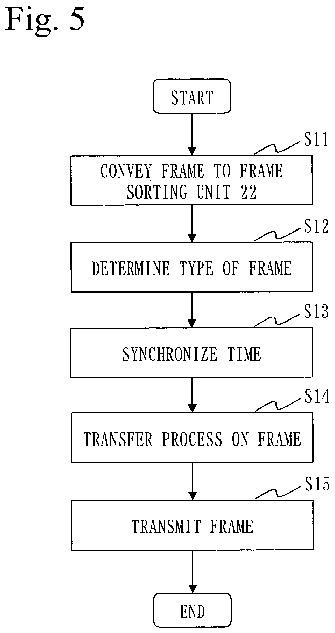

The operation of the transfer device 10 according to Embodiment 1 will be described with reference to Figs. 5 to 9.

An operation procedure of the transfer device 10 according to Embodiment 1 is equivalent to a time synchronization method according to Embodiment 1. Further, a program that implements the operation of the transfer device 10 according to Embodiment 1 is equivalent to a time synchronization program.

The overall processing of the transfer device 10 according to Embodiment 1 will be described with reference to Fig. 5.

### (Step S11: Frame Reception Process)

A frame input to the transfer device 10 is processed by the frame transmission/reception unit 21 corresponding to the port through which the frame is input. The frame transmission/reception unit 21 conveys the normally received frame to the corresponding frame sorting unit 22.

### (Step S12: Frame Sorting Process)

The frame sorting unit 22 determines a type of the frame by analyzing the contents of the conveyed frame. Frames are broadly divided into control frames and general frames. The frame sorting unit 22 extracts a parameter relating to control, for a frame determined to be a control frame, and conveys the parameter together with the control frame to a functional block that performs various controls. The frame sorting unit 22 extracts a parameter relating to the transfer process, for a frame determined to be a general frame, and conveys the frame together with the general frame to the switch function unit 23.

Here, time synchronization is performed using the control frame. When a PTP frame which is one of the control frames is input, the frame sorting unit 22 conveys the PTP frame to the synchronization function unit 24. The frame sorting unit 22 determines that the frame is the PTP frame, from an Ethernet type value of the frame. The Ethernet type value of the PTP frame is defined as 0x88F7 in Non-Patent Literature 2.

### (Step S13: Synchronization Function Process)

The synchronization function unit 24 performs delay measurement, time synchronization, decision of a time synchronization subject port, decision of a distribution tree by the BMCA, and generation and transmission of the PTP frame, based on a message stored in the PTP frame. The synchronization function unit 24 conveys to the switch function unit 23, the PTP frame to be transmitted together with information on the output port.

### (Step S14: Switch Function Process)

The switch function unit 23 performs the transfer process on the general frame conveyed from the frame sorting unit 22 and the PTP frame conveyed from the synchronization function unit 24.

The general frame has parameters indicating the VLAN if the VLAN is valid, in addition to a destination MAC address and a transmission source MAC address. The switch function unit 23 has a forwarding database (hereinafter referred to as an FDB) that decides a transfer route of the frame, by setting these parameters in advance or learning these parameters during the frame transfer. Therefore, the switch function unit 23 refers to the destination MAC address of the general frame and the value of the VLAN to decide the output port by collating them with the FDB. The switch function unit 23 conveys the general frame to the frame transmission/reception unit 21 corresponding to the output port.

The switch function unit 23 also performs for the PTP frame, transfer using the MAC address, the VLAN and the FDB as with the general frame. Further, the switch function unit 23 may decide the output port using the information on the output port conveyed together with the PTP frame from the synchronization function unit 24. This is because the types of the PTP frames include either unicast transmission (refers to the MAC address) or link-by-link transmission (the MAC address is a special address and is only transmitted to adjacent devices).

### (Step S15: Frame Transmission Process)

The frame transmission/reception unit 21 sends from a corresponding port, the frame transmitted from the switch function unit 23.

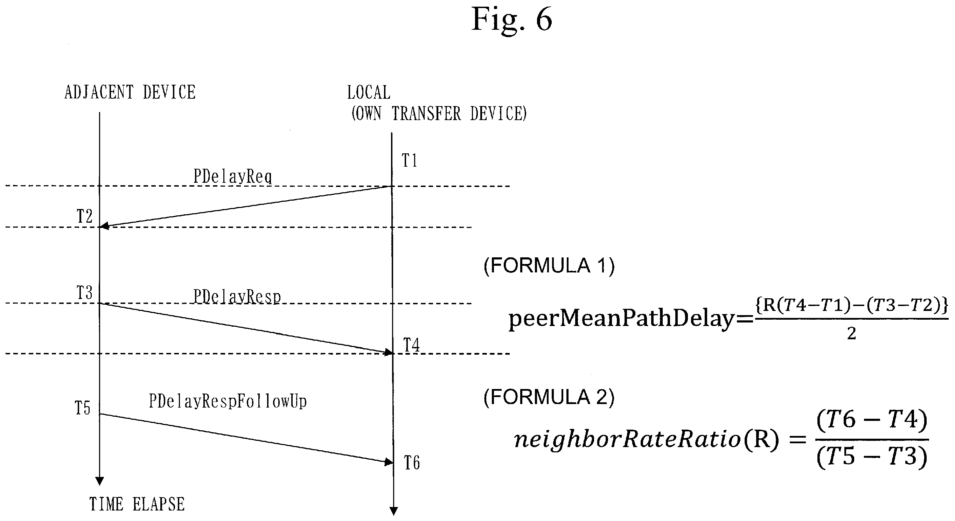

The synchronization function process (step S13 in Fig. 5) according to Embodiment 1 will be described with reference to Figs. 6 to 9.

The PTP frame conveyed to the synchronization function unit 24 is sorted to the PDelay reception unit 31, the Sync/FollowUp reception unit 32, and the Announce reception unit 33 according to the type of a message stored in the PTP frame.

### <Upon Reception of PDelayReq Message>

A PDelayReq message is sorted to the PDelay reception unit 31.

When the PDelayReq message is sorted, the PDelay reception unit 31 recognizes that a delay measurement request has been received. The PDelay reception unit 31 conveys to the gPTP frame transmission unit 39 to respond with the PDelayResp message and a PDelayRespFollowUp message (I27 in Fig. 4).

Upon receiving the conveyance, the gPTP frame transmission unit 39 generates the PDelayResp message and the PDelayRespFollowUp message. The gPTP frame transmission unit 39 stamps the local time corrected by the time synchronization unit 38 into the generated messages. The gPTP frame transmission unit 39 conveys to the switch function unit 23, the messages stamped with the local time, and transmits the messages to a device which is a delay measurement request source.

### <Upon Reception of PDelayResp/FollowUp Message>

The PDelayResp message and the PDelayRespFollowUp message are sorted to the PDelay reception unit 31.

The PDelay reception unit 31 obtains and holds the local time at which the PDelayResp message and the PDelayRespFollowUp message are received. The PDelayResp message and the PDelayRespFollowUp message include the time information stamped at the time of transmission by a transmission source device. The PDelay reception unit 31 conveys to the delay calculation unit 35, the time information included in the PDelayResp message and the PDelayRespFollowUp message.

The delay calculation unit 35 calculates a transmission delay and a frequency deviation between adjacent devices, using the time information included in the PDelayResp message and the PDelayRespFollowUp message. The transmission delay (peerMeanPathDelay) between the adjacent devices is referred to as an adjacent transmission delay. The frequency deviation (neighborRateRatio) between the adjacent devices is referred to as an adjacent frequency deviation. The adjacent transmission delay is calculated by Formula 1 in Fig. 6 as described in Non-Patent Literature 1. The adjacent transmission delay is used when the time synchronization unit 38 performs the time correction. The adjacent frequency deviation is calculated by Formula 2 in Fig. 6 as described in Non-Patent Literature 1. The adjacent frequency deviation is used for the time synchronization port decision by the synchronization port decision unit 36, the abnormality detection by the abnormality detection unit 37, and the time correction by the time synchronization unit 38.

The delay calculation unit 35 conveys to the time synchronization unit 38, the adjacent transmission delay and the adjacent frequency deviation (I21 in Fig. 4). The delay calculation unit 35 conveys to the synchronization port decision unit 36 and the abnormality detection unit 37, the adjacent frequency deviation (I22 in Fig. 4). The delay calculation unit 35 conveys to the gPTP frame transmission unit 39, the adjacent transmission delay and the adjacent frequency deviation (125 in Fig. 4).

### <Upon Reception of Sync/FollowUp Message>

The Sync message and the FollowUp message are sorted to the Sync/FollowUp reception unit 32.

The Sync/FollowUp reception unit 32 obtains and holds the local time at which the Sync message and the FollowUp message are received. The Sync/FollowUp reception unit 32 conveys the Sync message and the FollowUp message to the time synchronization unit 38.

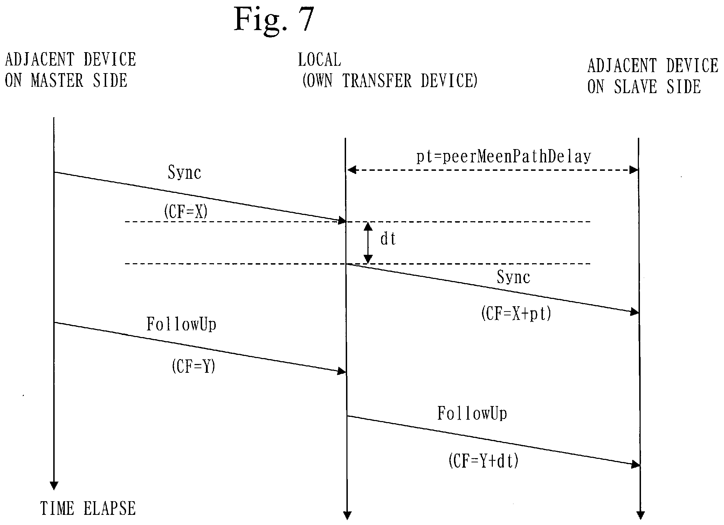

As illustrated in Fig. 7, the time synchronization unit 38 relays the Sync message and the FollowUp message to an adjacent device on the slave side, as specified in Non-Patent Literature 2.

At this time, the time synchronization unit 38 extracts a cumulative transmission delay which is stored in the Sync message in the gPTP and is a cumulative value of the transmission delay from the master device 40 to an adjacent device on the master side. The cumulative transmission delay is a cumulative value of the adjacent transmission delay of devices that have been passed through from the master device 40 to the adjacent device on the master side. Then, the time synchronization unit 38 calculates the cumulative transmission delay from the master device 40 to the own device by adding to the cumulative transmission delay, the adjacent transmission delay from the adjacent device on the master side to the own device.

Further, the time synchronization unit 38 extracts a cumulative frequency deviation which is stored in the Sync message in the gPTP and is a cumulative value of the frequency deviation from the master device 40 to the adjacent device on the master side. The cumulative frequency deviation is a cumulative value of the adjacent frequency deviation of devices that has been passed through from the master device 40 to the adjacent device on the master device. Then, the time synchronization unit 38 calculates the cumulative frequency deviation from the master device 40 to the own device by adding to the cumulative frequency deviation, the adjacent frequency deviation from the adjacent device on the master side to the own device.

The time synchronization unit 38 determines whether or not a port that has received the FollowUp message is consistent with a time synchronization port (I24 in Fig. 4) decided by the synchronization port decision unit 36 through processing to be described below.

When the port that has received the FollowUp message is consistent with the time synchronization port, the time synchronization unit 38 refers to a master time indicated in the time information in the received Sync message and FollowUp message. The master time is a time on the master device 40. Then, the time synchronization unit 38 reproduces from the mater time, the local time of the own device, using the adjacent transmission delay, the adjacent frequency deviation, a cumulative transmission delay amount and a cumulative device processing delay amount. Thereby, the time synchronization unit 38 updates the local time.

The time synchronization unit 38 conveys to the synchronization port decision unit 36 and the abnormality detection unit 37, the cumulative frequency deviation (I23 in Fig. 4).

### <Decision of Time Synchronization Port>

The synchronization port decision unit 36 is conveyed from the delay calculation unit 35, the adjacent frequency deviation (122 in Fig. 4). Further, the synchronization port decision unit 36 is conveyed from the time synchronization unit 38, the cumulative frequency deviation (123 in Fig. 4). The synchronization port decision unit 36 decides the time synchronization port, using the adjacent frequency deviation and the cumulative frequency deviation.

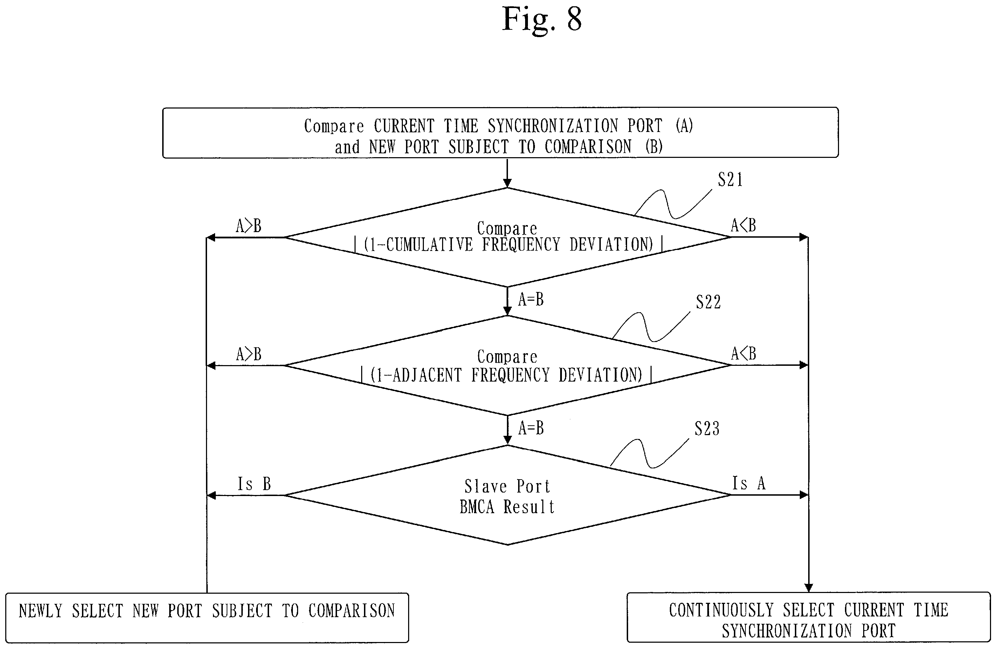

The decision process of the time synchronization port according to Embodiment 1 will be described with reference to Fig. 8.

The synchronization port decision unit 36 decides the time synchronization port from a plurality of ports that have received the Sync message and the FollowUp message. In other words, the synchronization port decision unit 36 decides the time synchronization port from the plurality of ports that have received the time information. Here, the plurality of ports receive the time information transmitted from the master device 40 via different transfer devices 10.

Here, the synchronization port decision unit 36 decides which of the port currently selected as the time synchronization port and a new port subject to comparison is to be the time synchronization port. The port currently selected as the time synchronization port is a port decided as the time synchronization port through the decision process of the previous time synchronization port. The new port subject to comparison is a port that has newly received the Sync message and the FollowUp message.

### (Step S21: Cumulative Determination Process)

The synchronization port decision unit 36 decides from among the plurality of ports, the time synchronization port based on the cumulative frequency deviation which is a cumulative value of the frequency deviation from the master device 40, for each of the plurality of ports. Specifically, the synchronization port decision unit 36 refers to the cumulative frequency deviation from the master device 40, and decides the port that has received the Sync message and the FollowUp message with the best result, as the time synchronization port.

Here, the synchronization port decision unit 36 comperes the cumulative frequency deviations between the port currently selected as the time synchronization port and the new port subject to comparison.

At this time, the synchronization port decision unit 36 compares absolute values of (1-cumulative frequency deviation). It is assumed that the absolute value of (1- cumulative frequency deviation) of the port currently selected as the time synchronization port is A. It is assumed that the absolute value of (1-cumulative frequency deviation) of the new port subject to comparison is B.

If A>B, the synchronization port decision unit 36 decides the new port subject to comparison, as the new time synchronization port. On the other hand, if A<B, the synchronization port decision unit 36 decides the port currently selected as the time synchronization port, as the time synchronization port. If A=B, the process proceeds to step S22.

### (Step S22: Adjacent Determination Process)

The synchronization port decision unit 36 decides from among the plurality of ports, the time synchronization port based on the adjacent frequency deviation which is the frequency deviation from adjacent devices which are transfer devices at direct transmission sources of the time information on each of the plurality of ports. Specifically, the synchronization port decision unit 36 refers to the adjacent frequency deviation from the adjacent device, and decides the port that has received the Sync message and the FollowUp message with the best result, as the time synchronization port.

Here, the synchronization port decision unit 36 compares the adjacent frequency deviations between the port currently selected as the time synchronization port and the new port subject to comparison. At this time, the synchronization port decision unit 36 compares absolute values of (1-adjacent frequency deviation). It is assumed that the absolute value of (1-the adjacent frequency deviation) of the port currently selected as the time synchronization port is A. It is assumed that the absolute value of (1-adjacent frequency deviation) of the new port subject to comparison is B.

If A>B, the synchronization port decision unit 36 decides the new port subject to comparison, as the new time synchronization port. On the other hand, if A<B, the synchronization port decision unit 36 decides the port currently selected as the time synchronization port, as the time synchronization port. If A=B, the process proceeds to step S23.

### (Step S23: BMCA Process)

The synchronization port decision unit 36 decides from among the plurality of the ports, the port decided by the BMCA described in Non-Patent Literature 2, as the time synchronization port. The BMCA is executed by the BMCA control unit 34. Here, the time synchronization port is decided by the BMCA from the port currently selected as the time synchronization port and the new port subject to comparison.

### <Abnormality Detection Process>

The abnormality detection unit 37 is conveyed from the delay calculation unit 35, the adjacent frequency deviation (122 in Fig. 4). Further, the abnormality detection unit 37 is conveyed from the time synchronization unit 38, the cumulative frequency deviation (123 in Fig. 4). The abnormality detection unit 37 detects an abnormality regarding each of the plurality of ports, using the adjacent frequency deviation and the cumulative frequency deviation. The plurality of ports here are ports that have received the Sync message and the FollowUp message, as with the decision process of the time synchronization port.

It is assumed that threshold values X, X' and threshold values Y, Y' for abnormality detection are set in advance by an administrator or the like. The threshold values X, X' and the threshold values Y, Y' may be fixed values that cannot be modified by the administrator. The threshold values X, X' are threshold values for detecting the occurrence of a catastrophic abnormality including disconnection, interruption, or the like. The threshold values Y, Y' are threshold values for detecting a sign of a catastrophic abnormality due to device instability, wiring deterioration, or the like.

The abnormality detection unit 37 detects an abnormality by comparing an adjacent determination index obtained from the adjacent frequency deviation at the most recent reference time and a cumulative determination index obtained from the cumulative frequency deviation at the most recent reference time with the threshold values X, X' and the threshold values Y, Y'. The reference time is set by the administrator or the like.

A specific example of the adjacent determination index is an absolute value of a value obtained by subtracting from an average value of the adjacent frequency deviations at the most recent reference times, the latest adjacent frequency deviation, as indicated in Formula 3. 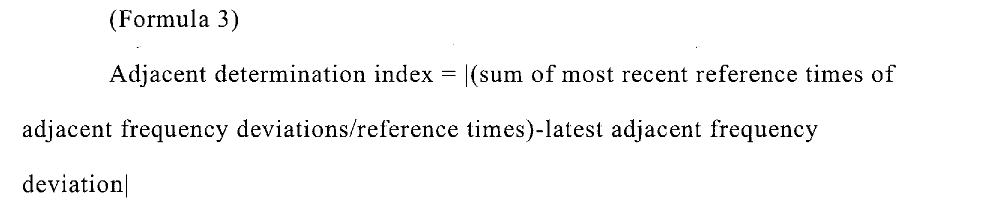 (Formula 3) Adjacent determination index = |(sum of most recent reference times of adjacent frequency deviations/reference times)-latest adjacent frequency deviation|

A specific example of the cumulative determination index is an absolute value of a value obtained by subtracting from an average value of the cumulative frequency deviations at the most recent reference times, the latest cumulative frequency deviation, as indicated in Formula 4. 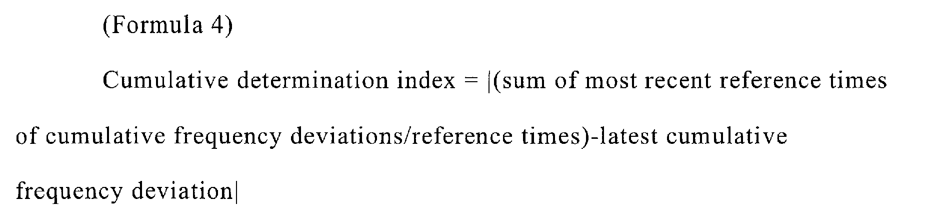 (Formula 4) Cumulative determination index = |(sum of most recent reference times of cumulative frequency deviations/reference times)-latest cumulative frequency deviation|

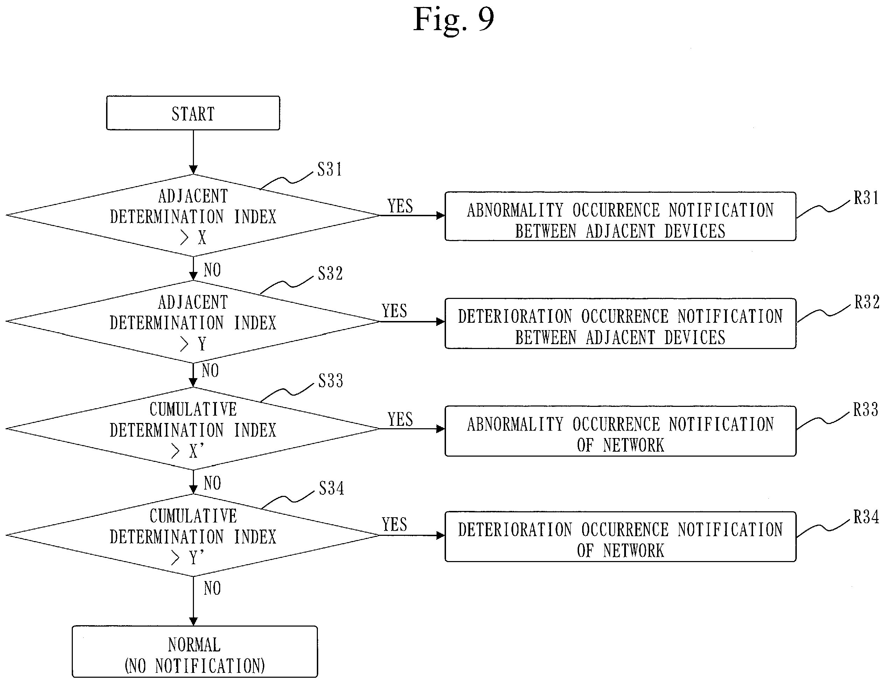

An abnormality detection process according to Embodiment 1 will be described with reference to Fig. 9.

The abnormality detection process is executed for each of the plurality of ports.

### (Step S31: Adjacent Abnormality Detection Process)

The abnormality detection unit 37 determines whether or not the adjacent determination index exceeds the threshold value X.

When the adjacent determination index exceeds the threshold value X, the abnormality detection unit 37 determines that an abnormality has occurred between adjacent devices regarding a subject port. Then, the abnormality detection unit 37 issues an abnormality occurrence notification (R31) between the adjacent devices. On the other hand, when the adjacent determination index does not exceed the threshold value X, the abnormality detection unit 37 proceeds the process to step S32.

### (Step S32: Adjacent Deterioration Detection Process)

The abnormality detection unit 37 determines whether or not the adjacent determination index exceeds the threshold value Y.

When the adjacent determination index exceeds the threshold value Y, the abnormality detection unit 37determines that a deterioration has occurred between adjacent devices regarding a subject port. Then, the abnormality detection unit 37 issues a deterioration occurrence notification (R32) between the adjacent devices. On the other hand, when the adjacent determination index does not exceed the threshold value Y, the abnormality detection unit 37 proceeds the process to step S33.

### (Step S33: Cumulative Abnormality Detection Process)

The abnormality detection unit 37 determines whether or not the cumulative determination index exceeds the threshold value X'.

When the cumulative determination index exceeds the threshold value X, the abnormality detection unit 37 determines that an abnormality has occurred on a path between the master devices 40 and a subject port. Then, the abnormality detection unit 37 issues an abnormality occurrence notification (R33) of the network. On the other hand, when the cumulative determination index does not exceed the threshold value X', the abnormality detection unit 37 proceeds the process to step S34.

### (Step S34: Cumulative Deterioration Detection Process)

The abnormality detection unit 37 determines whether or not the cumulative determination index exceeds the threshold value Y'.

When the cumulative determination index exceeds the threshold value Y', the abnormality detection unit 37 determines that a deterioration has occurred on a path between the master devices 40 and a subject port. Then, the abnormality detection unit 37 issues a deterioration occurrence notification (R34) of the network. On the other hand, when the cumulative determination index does not exceed the threshold value Y', the abnormality detection unit 37 determines to be normal and ends the process.

The CPU 12 absorbs the abnormality occurrence notification (R31) between the adjacent devices, the deterioration occurrence notification (R32) between the adjacent devices, the abnormality occurrence notification (R33) of the network, and the deterioration occurrence notification (R34) of the network, and issues an alert. The CPU 12 issues the alert to a terminal of the administrator by SNMP transmission, for example. SNMP is an abbreviation for Simple Network Management Protocol. Alternatively, the CPU 12 may issue a visualized alert, using an alarm application or the like.

### *** Effects of Embodiment 1 ***

As described above, the transfer device 10 according to Embodiment 1 decides from among a plurality of ports, a time synchronization port based on a cumulative frequency deviation from the master device 40 and an adjacent frequency deviation from adjacent devices. Thereby, even when a technique for synchronizing the time with high accuracy based on a transmission delay and a frequency deviation is used, it is possible to specify an appropriate time distribution path.

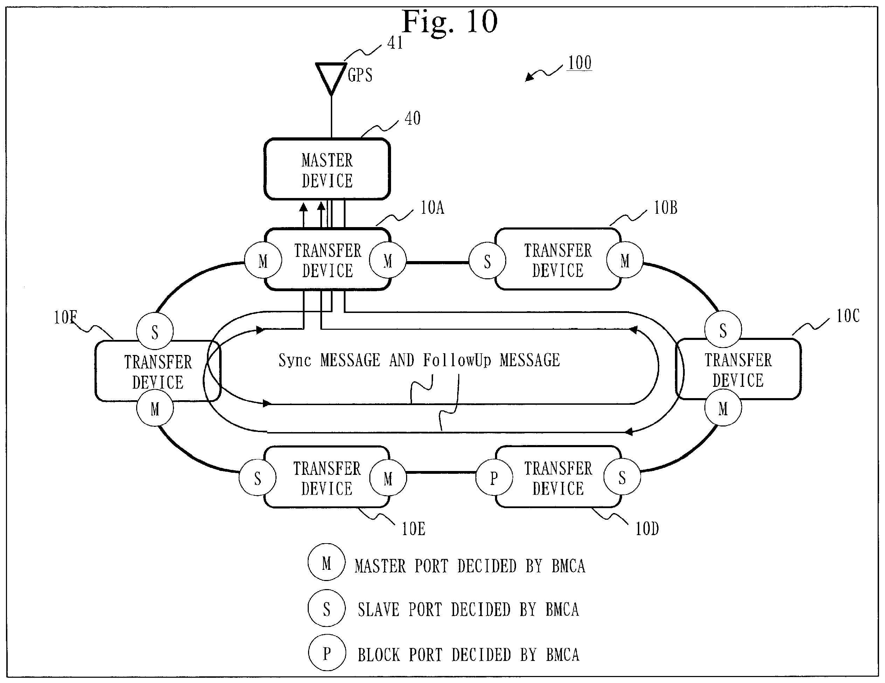

The transfer device 10 according to Embodiment 1 is broadcast with a Sync message and a FollowUp message to all distribution paths without using port types of a master, a slave, and a block decided by BMCA, as illustrated in Fig. 10. Thereby, it is possible to synchronize the time to the Sync message and the FollowUp message received from any of time distribution path candidates connected to the transfer device 10.

Then, as described above, a function is provided to uniquely decide the time synchronization port. Thereby, the Sync message and the FollowUp message with the highest accuracy are always selected. As a result, it is possible to always realize time synchronization with the master device 40 with the highest accuracy.

When a problem occurs with any device or wiring on a distribution path and communication is unstable, it takes time to reconstruct a time distribution tree constructed by the BMCA. Alternatively, since the communication itself continues in the time distribution tree constructed by the BMCA, the tree is not reconstructed and the operation continues with degraded time synchronization accuracy.

The transfer device 10 according to Embodiment 1 does not fall into such a state.

The transfer device 10 according to Embodiment 1 detects an abnormality or a deterioration based on the cumulative frequency deviation from the master device 40 and the adjacent frequency deviation from the adjacent devices. Thereby, it is possible to detect the abnormality or the deterioration at an early stage.

### *** Configurations of Others ***

### <Modification 1>

In Embodiment 1 a time synchronization function is implemented by the electronic circuit 11 which is a network processor. However, the time synchronization function may be implemented by software.

In this case, the RAM 13 stores a program that implements the time synchronization function. The CPU 12 reads and executes this program. Thereby, the time synchronization function is implemented.

### <Modification 2>

As Modification 2, a part of the time synchronization function may be implemented by hardware, and the remaining may be implemented by software.

The electronic circuit 11, the CPU 12, and the RAM 13 are referred to as a processing circuit. That is, the functions of the individual functional components are implemented by the processing circuit.

### Embodiment 2.

Embodiment 2 differs from Embodiment 1 in that a plurality of master devices 40 are present on the time synchronization system 100. In Embodiment 2, this difference will be described and the description of the same points will be omitted.

### *** Description of Configuration ***

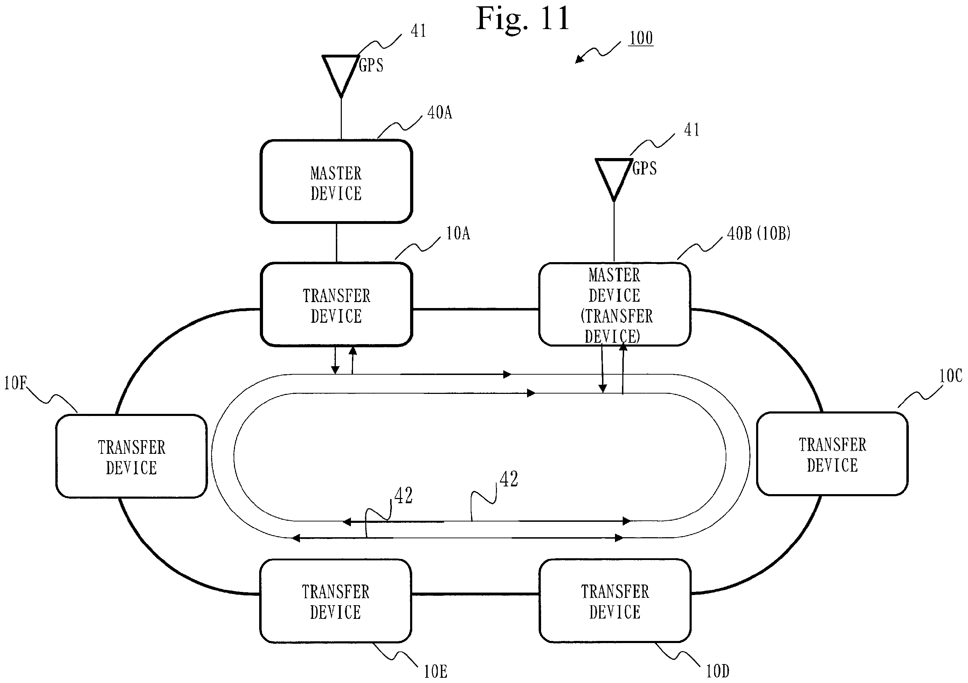

A configuration of the time synchronization system 100 according to Embodiment 2 will be described with reference to Fig. 11.

The time synchronization system 100 differs from the time synchronization system 100 illustrated in Fig. 1 in that the time synchronization system 100 includes the plurality of master devices 40. In Fig. 11, the time synchronization system 100 includes the master device 40A and the master device 40B.

Each of the master devices 40 performs time distribution to each of the transfer devices 10 serving as slave devices, by circulating the messages 42 (the Sync message and the FollowUp message).

### *** Description of Operation ***

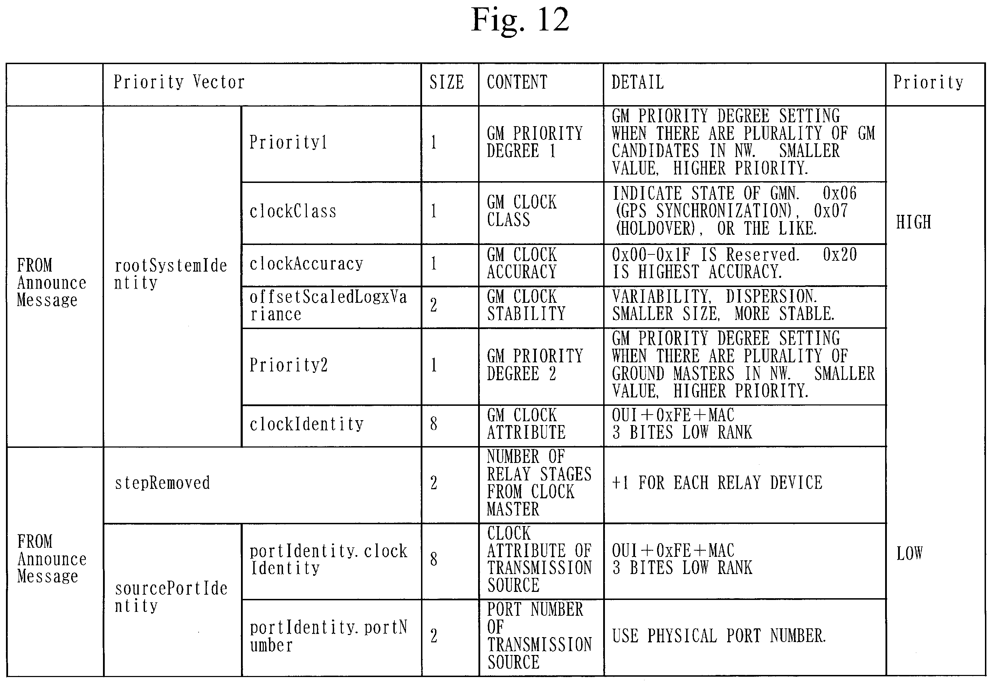

The operation of the transfer device 10 according to Embodiment 2 will be described with reference to Figs. 12 to 14.

An operational procedure of the transfer device 10 according to Embodiment 2 is equivalent to a time synchronization method according to Embodiment 2. Further, a program that implements the operation of the transfer device 10 according to Embodiment 2 is equivalent to a time synchronization program according to Embodiment 2.

In the BMCA, each of the transfer devices 10 decides which master device 40 to synchronize the time according to a Priority Vector set in advance for each of the master devices 40. As illustrated in Fig. 12, the Priority Vector is composed of static parameters such as a priority, an attribute, the number of stages of an Announce message, an MAC address, and a port number.

In Embodiment 1,only the frequency deviation at that time is used upon the decision of the time synchronization port. Then, the time distribution tree by the BMCA is not considered. In a case where the time synchronization system 100 includes the plurality of master devices 40, the priority degree setting and the like set for each of the master devices 40 are ignored in the decision process of the time synchronization port of Embodiment 1.

Thus, in Embodiment 2, the transfer device 10 decides the time synchronization port by combining decision logics with the master, slave, and block port by the BMCA.

### <Decision of Time Synchronization Port>

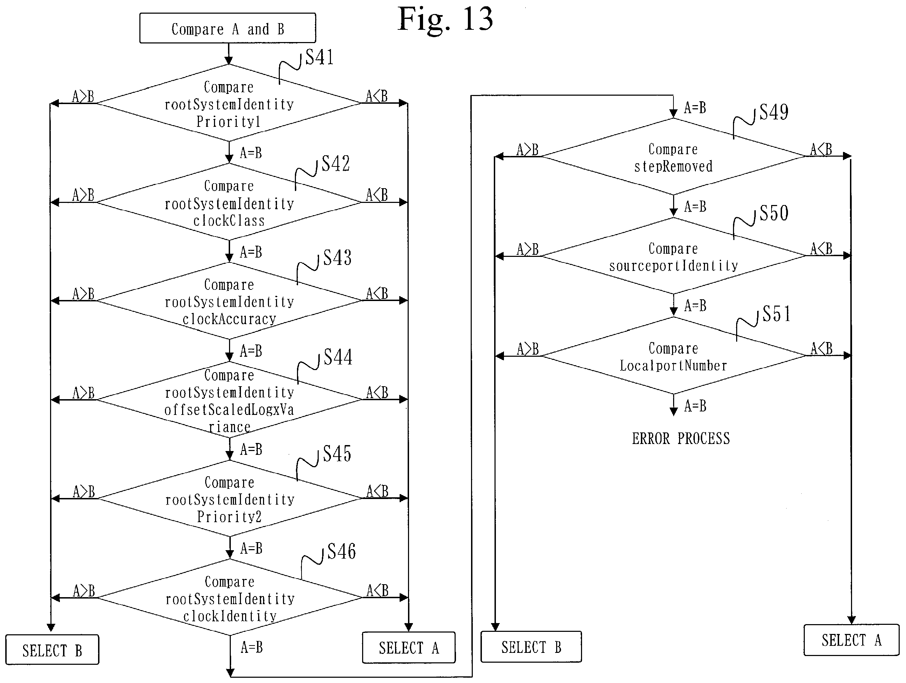

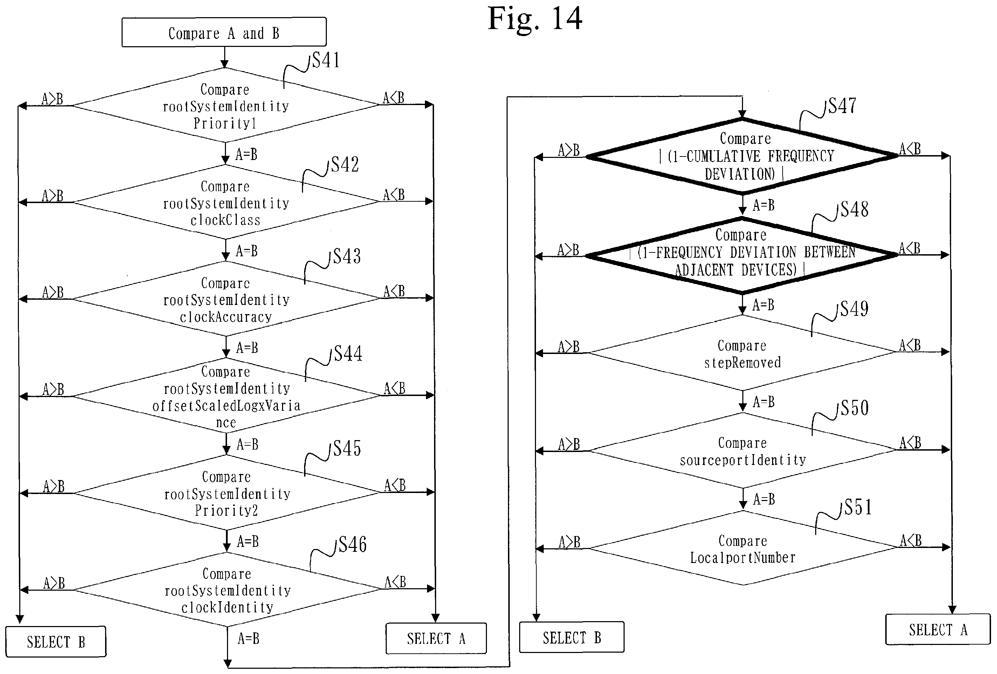

The decision process of the time synchronization port according to Embodiment 2 will be described with reference to Figs. 13 and 14.

Fig. 13 is a flowchart illustrated for comparison, and is a flowchart of the BMCA described in Non-Patent Literature 2. Fig. 14 is a flowchart of the decision process of the time synchronization port according to Embodiment 2. Here, it is assumed that a value on the port currently selected as the time synchronization port and on the side of the port currently selected as the time synchronization port is A. It is assumed that a value on the new port subject to comparison and on the side of the new port subject to comparison is B.

The processes of steps S41 to S46,and the processes of steps S49 to step S51 are the same as the processes of the BMCA.

### (Step S47: Cumulative Determination Process)

As with step S21 in Fig. 8, the synchronization port decision unit 36 compares the cumulative frequency deviations between the port currently selected as the time synchronization port and the new port subject to comparison. At this time, the synchronization port decision unit 36 compares absolutes values of (1-cumulative frequency deviation).

If A>B, the synchronization port decision unit 36 decides the new port subject to comparison, as the new time synchronization port. On the other hand, if A<B, the synchronization port decision unit 36 decides the port currently selected as the time synchronization port, as the time synchronization port. If A=B, the process proceeds to step S48.

### (Step S48: Adjacent Determination Process)

As with step S22 in Fig. 8, the synchronization port decision unit 36 compares the adjacent frequency deviations between the port currently selected as the time synchronization port and the new port subject to comparison. At this time, the synchronization port decision unit 36 compares absolute values of (1-adjacent frequency deviation).

If A>B, the synchronization port decision unit 36 decides the new port subject to comparison, as the new time synchronization port. On the other hand, if A<B, the synchronization port decision unit 36 decides the port currently selected as the time synchronization port, as the time synchronization port. If A=B, the process proceeds to step S49.

The positions where the processes of steps S47 and S48 are inserted into the BMCA are examples. It is also considered that the processes of steps S47 and S48 are inserted at different positions in the BMCA.

### *** Effects of Embodiment 2 ***

As described above, in a case where the time synchronization system 100 includes a plurality of master devices 40, the transfer device 10 according to Embodiment 2 can select the master device 40 in accordance with the intention of a designer of the time synchronization system 100. Further, the transfer device 10 according to Embodiment 2 can realize time synchronization with the master device 40 with the highest accuracy at that time.

Further, "unit" in the above description may be read as "circuit", "step", "procedure", "process", or "processing circuitry".

The embodiments and modifications of the present disclosure have been described above. Two or more of these embodiments and modifications may be implemented in combination. Alternatively, one or more of them may be partially implemented. The present disclosure is not limited to the above embodiments and modifications, and various modifications can be made as needed. The invention is solely defined by the appended claims.

### Reference Signs List

100: time synchronization system; 10: transfer device; 11: electronic circuit; 12: CPU; 13: RAM; 14: input/output interface; 21: frame transmission/reception unit; 22: frame sorting unit; 23: switch function unit; 24: synchronization function unit; 31: PDelay reception unit; 32: Sync/FollowUp reception unit; 33: Announce reception unit; 34: BMCA control unit; 35: delay calculation unit; 36: synchronization port decision unit; 37: abnormality detection unit; 38: time synchronization unit; 39: gPTP frame transmission unit; 40: master device; 41: GPS; 42: messages.

## Claims

1. A time synchronization apparatus comprising:
a synchronization port decision unit (36) to decide from among a plurality of ports, a time synchronization port based on a cumulative frequency deviation which is a cumulative value of a frequency deviation from a master device (40) for each of the plurality of ports that receive time information transmitted from the master device (40) via different transfer devices (10); and
a time synchronization unit (38) to update local time based on the time information received at the time synchronization port decided by the synchronization port decision unit (36).

2. The time synchronization apparatus according to claim 1, wherein
the synchronization port decision unit (36) decides the time synchronization port based on an adjacent frequency deviation which is the frequency deviation from adjacent devices which are transfer devices (10) at direct transfer sources of the time information on each of the plurality of ports.

3. The time synchronization apparatus according to claim 2, wherein
when the cumulative frequency deviation for two or more ports is best, the synchronization port decision unit (36) decides from among the two or more ports, the time synchronization port based on the adjacent frequency deviation.

4. The time synchronization apparatus according to any one of claims 1 to 3, wherein
the cumulative frequency deviation is periodically calculated, and
the time synchronization apparatus further comprises
an abnormality detection unit (37) to detect an abnormality between the master devises based on a cumulative determination index obtained from the cumulative frequency deviation at a reference time.

5. The time synchronization apparatus according to claim 2,
wherein
the adjacent frequency deviation is periodically calculated, and
the time synchronization apparatus further comprises
an abnormality detection unit (37) to detect an abnormality between the adjacent devices based on an adjacent determination index obtained from the adjacent frequency deviation at a reference time.

6. The time synchronization apparatus according to any one of claims 1 to 5, wherein
the plurality of ports receive the time information transmitted from one of a plurality of master devices (40), and
the synchronization port decision unit (36) decides from among the plurality of ports, a candidate port that is a candidate for the time synchronization port, by specifying a preferred master device (40) from among the plurality of master devices (40), and when a plurality of candidate ports are specified, decides from among the plurality of candidate ports, the time synchronization port based on the cumulative frequency deviation for each of the plurality of candidate ports.

7. A time synchronization method comprising:
deciding, by a computer, from among a plurality of ports, a time synchronization port based on a cumulative frequency deviation which is a cumulative value of a frequency deviation from a master device (40) for each of the plurality of ports that receive time information transmitted from the master device (40) via different transfer devices (10); and
updating, by the computer, local time based on the time information received at the time synchronization port.

8. A time synchronization computer program comprising instructions which, when the program is executed by a computer, cause the computer to function as a time synchronization apparatus carrying out the steps of the method of claim 7.

## Patentansprüche

1. Zeitsynchronisationsvorrichtung, umfassend:
eine Synchronisationsport-Festlegungseinheit (36) zum Festlegen eines Zeitsynchronisationsports aus einer Vielzahl von Ports auf der Grundlage einer kumulativen Frequenzabweichung, bei der es sich um einen kumulativen Wert einer Frequenzabweichung zu einer Master-Einrichtung (40) für jeden der Vielzahl von Ports handelt, die Zeitinformationen empfangen, die von der Master-Einrichtung (40) über verschiedene Transfereinrichtungen (10) übertragen werden; und
eine Zeitsynchronisationseinheit (38) zum Aktualisieren einer lokalen Zeit auf der Grundlage der Zeitinformationen, die an dem von der Synchronisationsport-Festlegunseinheit (36) festgelegten Zeitsynchronisationsport empfangen werden.

2. Zeitsynchronisationsvorrichtung nach Anspruch 1, wobei
die Synchronisationsport-Festlegungseinheit (36) den Zeitsynchronisationsport auf der Grundlage einer benachbarten Frequenzabweichung, die eine Frequenzabweichung zu benachbarten Einrichtungen ist, bei denen es sich um Transfereinrichtungen (10) an direkten Transferquellen der Zeitinformationen an jedem der Vielzahl von Ports handelt, festlegt.

3. Zeitsynchronisationsvorrichtung nach Anspruch 2, wobei
wenn die kumulative Frequenzabweichung für zwei oder mehr Ports am besten ist, die Synchronisationsport-Festlegungseinheit (36) aus den zwei oder mehr Ports den Zeitsynchronisationsport auf der Grundlage der benachbarten Frequenzabweichung festlegt.

4. Zeitsynchronisationsvorrichtung nach einem der Ansprüche 1 bis 3, wobei
die kumulative Frequenzabweichung periodisch berechnet wird, und
die Zeitsynchronisationsvorrichtung ferner umfasst:
eine Anomalieerfassungseinheit (37) zum Erfassen einer Anomalie zwischen den Master-Einrichtungen auf der Grundlage eines kumulativen Bestimmungsindexes, der aus der kumulativen Frequenzabweichung zu einem Referenzzeitpunkt erhalten wird.

5. Zeitsynchronisationsvorrichtung nach Anspruch 2, wobei
die benachbarte Frequenzabweichung periodisch berechnet wird, und
die Zeitsynchronisationsvorrichtung ferner umfasst:
eine Anomalieerfassungseinheit (37) zum Erfassen einer Anomalie zwischen den benachbarten Einrichtungen auf der Grundlage eines benachbarten Bestimmungsindexes, der aus der benachbarten Frequenzabweichung zu einem Referenzzeitpunkt erhalten wird.

6. Zeitsynchronisationsvorrichtung nach einem der Ansprüche 1 bis 5, wobei
die Vielzahl von Ports die Zeitinformationen empfangen, die von einer Vielzahl von Master-Einrichtungen (40) übertragen werden, und
die Synchronisationsport-Festlegungseinheit (36) aus der Vielzahl von Ports einen Kandidatenport auswählt, der ein Kandidat für den Zeitsnchronisationsport ist, indem aus der Vielzahl von Master-Einrichtungen (40) eine bevorzugte Master-Einrichtung (40) spezifiziert wird, und wenn eine Vielzahl von Kandidatenports spezifiziert wird, aus der Vielzahl von Kandidatenports den Zeitsynchronisationsport auf der Grundlage der kumulativen Frequenzabweichung für jeden der Vielzahl von Kandidatenports festlegt.

7. Zeitsynchronisationsverfahren, umfassend:
Festlegen, durch einen Computer, eines Zeitsynchronisationsports aus einer Vielzahl von Ports auf der Grundlage einer kumulativen Frequenzabweichung, bei der es sich um einen kumulativen Wert einer Frequenzabweichung zu einer Master-Einrichtung (40) für jeden der Vielzahl von Ports handelt, die Zeitinformationen empfangen, die von der Master-Einrichtung (40) über verschiedene Transfereinrichtungen (10) übertragen werden; und
Aktualisieren, durch den Computer, einer lokalen Zeit auf der Grundlage der Zeitinformationen, die an dem Zeitsynchronisationsport empfangen werden.

8. Zeitsynchronisation-Computerprogramm, umfassend Anweisungen, die, wenn das Programm durch einen Computer ausgeführt wird, den Computer veranlassen, als Zeitsynchronisationsvorrichtung zu arbeiten, welche die Schritte des Verfahrens nach Anspruch 7 ausführt.

## Revendications

1. Un appareil de synchronisation temporelle comprenant :
une unité de décision de port de synchronisation (36) pour décider, parmi une pluralité de ports, un port de synchronisation temporelle sur la base d'un écart de fréquence cumulatif qui est une valeur cumulative d'un écart de fréquence par rapport à un dispositif maître (40) pour chacun de la pluralité de ports qui reçoivent l'information temporelle transmise depuis le dispositif maître (40) via différents dispositifs de transfert (10) ; et
une unité de synchronisation temporelle (38) pour mettre à jour l'heure locale sur la base de l'information temporelle reçue au niveau du port de synchronisation temporelle décidé par l'unité de décision de port de synchronisation (36).

2. L'appareil de synchronisation temporelle selon la revendication 1, dans lequel
l'unité de décision de port de synchronisation (36) décide le port de synchronisation temporelle sur la base d'un écart de fréquence adjacent qui est l'écart de fréquence par rapport à des dispositifs adjacents qui sont des dispositifs de transfert (10) au niveau de sources de transfert direct de l'information temporelle sur chacun de la pluralité de ports.

3. L'appareil de synchronisation temporelle selon la revendication 2, dans lequel
lorsque l'écart de fréquence cumulatif pour deux ports ou plus est le meilleur, l'unité de décision de port de synchronisation (36) décide parmi ces deux ports ou plus, le port de synchronisation temporelle sur la base de l'écart de fréquence adjacent.

4. L'appareil de synchronisation temporelle selon l'une quelconque des revendications 1 à 3, dans lequel
l'écart de fréquence cumulatif est calculé périodiquement, et
l'appareil de synchronisation temporelle comprend en outre
une unité de détection d'anomalie (37) pour détecter une anomalie entre les dispositifs maîtres sur la base d'un indice de détermination cumulatif obtenu à partir de l'écart de fréquence cumulatif à un temps de référence.

5. L'appareil de synchronisation temporelle selon la revendication 2, dans lequel
l'écart de fréquence adjacent est calculé périodiquement, et
l'appareil de synchronisation temporelle comprend en outre
une unité de détection d'anomalie (37) pour détecter une anomalie entre les dispositifs adjacents sur la base d'un indice de détermination adjacent obtenu à partir de l'écart de fréquence adjacent à un temps de référence.

6. L'appareil de synchronisation temporelle selon l'une quelconque des revendications 1 à 5, dans lequel
la pluralité de ports reçoit l'information temporelle transmise depuis l'un d'une pluralité de dispositifs maîtres (40), et
l'unité de décision de port de synchronisation (36) décide, parmi la pluralité de ports, un port candidat qui est un candidat pour le port de synchronisation temporelle, en spécifiant un dispositif maître préféré (40) parmi la pluralité de dispositifs maîtres (40), et lorsqu'une pluralité de ports candidats sont spécifiés, décide, parmi la pluralité de ports candidats, le port de synchronisation temporelle sur la base de l'écart de fréquence cumulatif pour chacun de la pluralité de ports candidats.

7. Un procédé de synchronisation temporelle comprenant :
décider, par un ordinateur, parmi une pluralité de ports, un port de synchronisation temporelle sur la base d'un écart de fréquence cumulatif qui est une valeur cumulative d'un écart de fréquence par rapport à un dispositif maître (40) pour chacun de la pluralité de ports qui reçoivent l'information temporelle transmise depuis le dispositif maître (40) via différents dispositifs de transfert (10) ; et
mettre à jour, par l'ordinateur, l'heure locale sur la base de l'information temporelle reçue au niveau du port de synchronisation temporelle.

8. Un programme informatique de synchronisation temporelle comprenant des instructions qui, lorsque le programme est exécuté par un ordinateur, amènent l'ordinateur à fonctionner en tant qu'appareil de synchronisation temporelle exécutant les étapes du procédé selon la revendication 7.
